# EUROPEAN PATENT APPLICATION

(11) **EP 2 416 606 A1**
(43) Date of publication of application: **08.02.2012**
(21) Application number: 09842471.6
(22) Date of filing: 29.09.2009
(51) Int. Cl.: H04W 36/00

(54) **APPARATUS AND METHOD FOR MOVING WCDMA MOBILE STATION INTHE MANNER OF THE LEAST PACKET LOSS**

(30) Priority: 31.03.2009 WO PCT/EP2009/002340
(71) Applicant: Telefonaktiebolaget LM Ericsson (publ), 164 83 Stockholm (SE)
(72) Inventor: ZHANG, Kevin, Shanghai (CN); RAMLE, Peter, SE-435 31 Mölnlycke (SE)
(74) Representative: Burchardi, Thomas
(86) International application number: PCT/CN2009/001075
(87) International publication number: WO 2010/111814

(57) **Abstract**

A method for moving MS in the manner of the least packet loss can be divided into two steps. In the first step, when the MS is still connected to the source CN node and is running the effective loads, the MS prepares the routing information pointing at the target CN node. In the second step, the connection between the source CN node and the RAN node is released, the MS ID, the context data and the mobile information are transmitted to the target CN node. Then, a new connection between the target CN node and the RAN node is established. The step is completed synchronously and rapidly to minimize the packet loss. When establishing a new connection, the routing information transmitted to the MS before is used so that the CN node is pointed at.

## Description

This application claims the benefit and priority of PCT/EP2009/002340, entitled "REDISTRIBUTION OF TERMINALS", which is incorporated by reference herein in its entirety.

### Technical field

The present invention relates to a solution for moving a MS in a wireless communication network with minimized packet loss and in particular to a solution for handing attachments in the network.

### Background

When user equipment (UE or MS) attaches to a cellular network it connects to a core network entity that may be a member of a pool of core network entity, for WCDMA or LTE case a mobility management device (MME), e.g. a Serving GPRS Support node (SGSN) or Mobility Management Entity (MME). Standardization protocols enable move between different SGSNs of subscribers performing Routing Area Update (RAU) and at attach, but also means necessary to move remaining subscribers not performing any of these operations. The remaining subscribers are those that are immobile enough to not perform a RAU and at the same time are running payload frequently enough to not execute the periodic RAU procedure. Move of these may be performed by executing a detach procedure with reattach required.

Redistribution of UEs in an SGSN Pool is described in 3GPP TS 23.236 and for an MME Pool in 3GPP 23.401. The Re-distribution of UEs is initiated via an O&M command in the CN node, which needs to be off-loaded.

In a first phase (a couple of Periodic LU/RAU periods long), UEs doing RAU or Attach are moved to other SGSN in the pool. When the SGSN receives the Routing Area Update or Attach request, it returns a new P-TMSI with a null-NRI, and a non-broadcast RAI in the accept message.

In the PS domain, a new Routing Area Update is triggered by setting the periodic routing area update timer to a sufficiently low value (recommended value is 4 seconds) in the accept message. The UE will shortly after send a new Routing Area Update that the RAN node then will route to a new SGSN due to the presence of a null-NRI.

In a second phase, the SGSN requests all UEs trying to set up PDP Contexts to detach & reattach. When they reattach, the SGSN moves them as in the first phase described above.

A third phase includes scanning through remaining UEs and initiating a move of them to other SGSN. In the PS domain UEs are requested to detach and reattach, which will cause them to be moved

UEs being moved from one SGSN are stopped from registering to the same SGSN again by an O&M command in BSCs and RNCs connected to the pool. UEs moving into a pool area may also be stopped from registering into a SGSN being off-loaded in the same manner.

According to 3GPP 23.236, in SGSN Pool, there are situations where a network operator will wish to remove load from one SGSN node in an orderly manner (e.g. to perform scheduled maintenance, or, to perform load re-distribution to avoid overload) with minimal impact to end users and/or additional load on other entities. The re-distribution procedure does not require any new functionality in the terminal, that is, all terminals can be moved.

However, when a MS is in PMM-CONNECT (i.e. being active), it will not perform periodic RAU nor attach. With the solution suggested in 23.236, if operators want to move the MSs in PMM-CONNECT with PDP, the current PS service will be interrupted. The user has to re-establish the service in the target SGSN of the move.

It is unacceptable for the MS doing uninterruptible service, such as VoIP, FTP, streaming, and so on. A procedure of moving MS in PMM-CONNECT with minimized packet loss is therefore a highly wanted feature.

Moreover, the existing solution has the following problems:
- No standardized way or suggestion on how to move active subscribers in SGSN from one pool member to another without using the crude detach.
- Payload interrupts which could last many seconds during move operation between pool members. This is valid for load re-balancing of both the SGSN Pool and the MME Pool.
- The standardized way to perform load re-balancing between MMEs is based on distribution performed by the eNodeB. This means that without additional information the eNodeB may only perform random distribution of UEs based on the MME capacity weight and is not able to consider end-user behavior and its impact on MME load.

An arrangement and a method for moving active subscribers without significant service interruption are therefore a highly wanted feature.

### Summary

It is therefore an object of the present invention to provide a solution for moving subscriber's contexts without significant service interruptions. This will be exemplified in a WCDMA environment and in an LTE environment.

The purpose of moving active subscriber i.e. MS in PMM-CONNECT is to make it possible to seamlessly move active subscribers (i.e. subscribers running payload) from a source CN node (e.g. SGSN) to a target CN node (e.g. SGSN) in the pool, i.e. they should be moved with minimized packet loss.

The basic idea of this invention in the WCDMA example may be described in two steps:
In step one the MS is prepared with routing information pointing to the target CN node while it is still connected to the source CN node and while it is running payload.
In step two the connection between the source CN node and the RAN node is released. MS ID, context data and mobility info is communicated to the target CN node. Then a new connection is setup between the target CN node and the RAN node. This is done in a synchronized and fast manner, thus minimizing the packet loss. At setup of the new connection the routing information previously sent to the MS is used, thus pointing to the new CN node.

The way of handling the payload path from the CN towards the RAN depends on the network architecture and is therefore different in the E-UTRAN (MME) and UTRAN (SGSN) case as well as if 3GDT (UTRAN only) is used or not.

The objects of the present invention are provided in a number of aspects, in which a first is a source attachment node in a wireless communication network, comprising:
- a processing unit (201);
- a memory (202);
- a communication interface (204);
   wherein the processing unit is arranged to execute instruction sets stored in the memory, for receiving a MS (1) related information, handing attachment status of the MS, and further arranged to move attachment of the active MS from the source attachment node (4) to a target attachment node (5) using the steps of:
   - obtaining a decision to move the MS to the target attachment node;
   - transmitting reallocation messages to the MS;
   - paging the MS;

The node may be one of a Serving GPRS Support Node and a Mobility Management Entity.

The node may further be arranged to receiving a cancel location message from a subscription server.

The node may further be arranged to exchanging bearer modification messages with a gateway (7).

A second aspect of the present invention is provided, a source attachment node in a wireless communication network, comprising:
- a processing unit (201);
- a memory (202);
- a communication interface (204);
wherein the processing unit is arranged to execute instruction sets stored in the memory, for receiving a MS (1) related information, handing attachment status of the MS, and further arranged to move attachment of the active MS from the source attachment node (4) to a target attachment node (5) using the steps of:
- obtaining a decision to move the MS to the target attachment node;
- exchanging MS communication data with the target attachment node;
- exchanging re-allocation message with the MS; and
- sending a relocation message to the target attachment node.

The node may be one of a Serving GPRS Support Node and a Mobility Management Entity.

The node may further be arranged to receiving a cancel location message from a subscription server.

The node may further be arranged to exchanging bearer modification messages with a gateway (7).

The node may further arranged to use a step of transferring security context data to the target attachment node.

A third aspect of the present invention is provided, a target attachment node in a wireless communication network, comprising:
- a processing unit (201);
- a memory (202);
- a communication interface (204);
   wherein the processing unit is arranged to execute instruction sets stored in the memory, for receiving a MS (1) related information, handing attachment status of the MS, and further arranged receive attachment of the MS from a source attachment node (4) using the steps of:
   - receiving service request from the MS;
   - requesting MS communication data from the source attachment node;
   - re-establishing bearer connection for the MS.

The node may further be arranged to receive and buffer downlink payload data destined for the MS until re-establishment of bearer connection is executed.

The node may further be arranged to discard payload data destined for the MS until re-establishment of bearer connection is executed.

The node may further is one of a Serving GPRS Support Node and a Mobility Management Entity.

The node may further be arranged to send an update location message to a user subscription service (8).

The node may further be arranged to exchanging bearer modification messages with a gateway (7).

A third aspect of the present invention is provided, a target attachment node in a wireless communication network, comprising:
- a processing unit (201);
- a memory (202);
- a communication interface (204);
   wherein the processing unit is arranged to execute instruction sets stored in the memory, for receiving a MS (1) related information, handing attachment status of the MS, and further arranged receive attachment of the MS from a source attachment node (4) using the steps of:
   - exchanging user equipment communication data with the source attachment node;
   - paging the user equipment;
   - re-establishing bearer connection for the user equipment.

The node may further be arranged to receive and buffer downlink payload data destined for the MS until re-establishment of bearer connection is executed.

The node may further be arranged to discard payload data destined for the MS until re-establishment of bearer connection is executed.

The node may further is one of a Serving GPRS Support Node and a Mobility Management Entity.

The node may further be arranged to send an update location message to a user subscription service (8).

The node may further be arranged to exchanging bearer modification messages with a gateway (7).

A fifth aspect of the present invention is provided, a method handing attachment status for a MS (1) in a wireless communication network (6), comprising steps of:
- transmitting reallocation messages to the MS by a source node;
- receiving in the MS new identification data from the source node;
- sending service request to a target node by the MS;
- requesting MS communication data from the source node by the target node;
- re-establishing bearer connection.

The method may further comprise a step of buffering downlink payload communication data.

The method may comprise a step of communicating subscription data with a subscription server.

A sixth aspect of the present invention is provided, a method handing attachment status for a MS (1) in a wireless communication network (6), comprising steps of:
- exchanging UE information between a source (4) and target (5) core network node;
- receiving in the source node new identification data for the MS from the target node;
- exchanging re-allocation messages between the source node and the MS;
- transferring from the source node new identification data to the MS; and
- re-establishing bearer connection.

The method may further comprise a step of buffering downlink payload communication data.

The method may comprise a step of communicating subscription data with a subscription server.

The method may further comprise a step of discarding payload data destined to the UE until re-establishment of bearer connection is executed.

The aspects of the present invention provide a number of advantages as compared to known solutions:
- It's unnecessary to change any of current 3GPP messages, very easy for implementation.
- Improve the perception and the value of the SGSN Pool features by moving MS with payload, without detach and re-attach. Then all the PDP context can be kept in target SGSN with minimized packet/service loss.

- Possibility to select target CN node from the CN, in contrast to the possibilities in the standardized solution.
- A RAN vendor independent solution.
- Improve service availability

These and other aspects of the invention will be apparent from and elucidated with reference to the embodiments described hereinafter.

### Brief description of the drawings

Fig.1 illustrates schematically a network according to the present invention;
Fig.2 illustrates schematically a device according to the present invention;
Fig. 3 illustrates a specific example of the method according to the present invention in a more detailed form;
Fig.4 illustrates a process for moving MS from one SGSN to another SGSN according to one embodiment of the present invention;
Fig.5 illustrates a process for moving MS from one SGSN to another SGSN according to another embodiment of the present invention;
Fig. 6 illustrates another specific example of the method according to the present invention in a more detailed form;
Fig.7 illustrates schematically a signaling method according to another embodiment of the present invention; and
Fig.8 illustrates schematically a signaling method according to another embodiment of the present invention.

### Detailed description

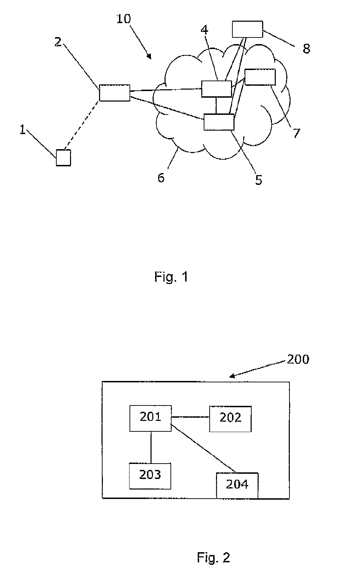

In Fig. 1 reference numeral 10 generally indicates a network according to the present invention. The network comprise an infrastructure core network (CN) part 6 comprising devices for operating a suitable communication protocol. The infrastructure comprises in this example mobility management devices 4 and 5 in communication with a radio access network device 2. The mobility management devices/nodes (MME) may for instance be a Serving GPRS Support Node (SGSN) or a Mobility Management Entity (MME) and the radio access network devices may be for instance a Radio Network Controller (RNC) or an eNodeB. The mobility management devices are in turn connected to a network gateway 7, e.g. a Gateway GPRS Support Node (GGSN) or a Serving gateway (SGW). The MME 4, 5 are in turn in communication with a subscriber database 8, e.g. Home Location Register (HLR) or a Home Subscriber Server (HSS).

The infrastructure mobility management entities 4, 5 (MME) provide mobility management of MS (Mobile Station) or UE (User Equipment) 1 between different MMEs in the core network. The MS 1 attaches to the network via a radio access device 2 and this in turn communicate with the mobility management entity 4 or 5. In the present invention a method is provided to move the MS's contexts from one MME to another. This will be exemplified for two scenarios: WCDMA and LTE based communication networks.

Fig. 2 shows a device 200 executing in a processing unit 201 instruction sets in program code stored in a memory 202 for executing method steps according to the present invention. The device also comprises a communication interface 204 and optionally a user interface 203. The processing unit is arranged to execute the instruction sets and to use the communication interface for communicating control traffic and/or data traffic via the network 6 (shown in Fig. 1). The processing unit may comprise any suitable type of processing unit, such as a micro processor, a field programmable gate array (FPGA), an application specific integrated circuit (ASIC) or similar computational/processing unit. Furthermore, the memory unit may be any type of suitable memory, volatile or non-volatile type, such as RAM, DRAM, flash type, hard disk, CD ROM, DVD, and so on. The communication interface may comprise any suitable packet type interface, e.g. Ethernet, ATM, ADSL, Token ring, x25, or similar as understood by the skilled person. Optionally, the user interface may be provided for local control of the device; However, the device may also be remotely controlled using the communication interface. The program instructions may be distributed during installation to the device using the communication interface or using a non-volatile memory unit connected to the device.

Basically, a method according to the present invention may be divided into two steps. In step one, the MS is prepared with routing information pointing to the target CN node while it is still connected to the source CN node and while it is running payload.

In step two the connection between the source CN node and the RAN node is released. MS ID, context data and mobility info is communicated to the target CN node. Then a new connection is setup between the target CN node and the RAN node. This is done in a synchronized and fast manner, thus minimizing the packet loss. At setup of the new connection the routing information previously sent to the MS is used, thus pointing to the new CN node.

The way of handing the payload path from the CN towards the RAN depends on the network architecture and is therefore different in the E-UTRAN (MME) and UTRAN (SGSN) case as well as if 3GDT (UTRAN only) is used or not.

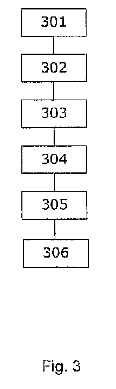

Fig. 3 illustrates a specific example of the method according to the present invention in a more detailed form:
301. A decision is taken to move the MS's contexts from one MME to another MME. This decision may be taken in a source MME or elsewhere in the infrastructure network depending on reason for decision or where statistical analysis is provided if the decision is based on statistics.
302. The source mobility management device transmits reallocation messages to the MS.
303. Connection between the source MME and the MS is released, and a target MME receives service request from the MS.
304. The target MME initiate Context Request to the source MME and a new connection between the target MME and the MS is established wherein the target MME takes over control of the control plane.
305. Updating of location information in subscription node, e.g. HLR or HSS. 306. Re-establishing 3GDT connections.

It should be noted that payload paths and data may be handled in different ways depending on configuration. This will be discussed later in this document in relation to respective configuration.

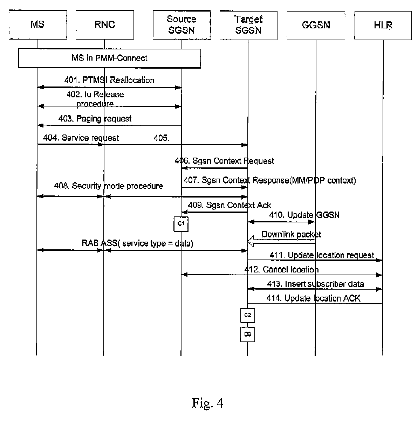

Referring to Fig. 4, in one of WCDMA exemplary cases, move of an active subscriber from a source SGSN, to a target SGSN, involves the following steps:
Step 401: For MS in PMM-CONNECT, the SGSN initiates a PTMSI Reallocation procedure to the MS, The NRI in the PTMSI is set to point to the target SGSN which the MS should be moved to. The PTMSI reallocation should avoid repetition with the PTMSI in the target SGSN, and include the information of the source SGSN. This relies on network topology.
Step 402: Then, source SGSN releases lu connection toward the MS so as to leave MS in PMM-IDLE.
Step 403: If MS has any uplink, it will initiate service request to RNC. Source SGSN can also page it or submit a paging request to MS.
Step 404: After receiving the paging request, MS can also initiate service request to RNC.
Step 405: When receiving the service request from MS, RNC will route it to the target SGSN, because the NRI in the PTMSI points to the target SGSN.
Step 406: After receiving the service request form MS, target SGSN can identify that the move is made for MS, i.e., it's a MS move, and initiate SGSN Context Request to source SGSN.
Step 407: As a reply, the source SGSN returns SGSN Context Response (MM/PDP context). Note that the resolution of old SGSN is strongly related with the PTMSI reallocation, It also relies on network topology. Note the whole procedure will follow the inter SGSN RAU procedure without RAU accept.
Step 408: Upon receiving the SGSN context response, security function will be used by target SGSN. Namely, a security mode procedure is carried out between MS and target SGSN via RNC.
Step 409: Target SGSN returns a SGSN Context Ack to source SGSN.
Step 410: Then, after sending SGSN Context Ack to source SGSN, target SGSN updates GGSN and initiates RAB ASS procedure toward RNC due to service type in the service request is "DATA" or downlink packet from GGSN.
Step 411: Then, target SGSN sends an Update location request to HLR.
Step 412: HLR sends a Cancel location command to source SGSN in response to the Update location request.
Step 413: The insertion of subscriber data occurs between target SGSN and HLR.
Step 414: Then, HLR sends an Update location ACK to target SGSN.

In step 401, typically, source SGSN can process PTMSI reallocation in the following manner.
(1) New PTMSI = F1(target NRI) with Broadcast RAI, target NRI is used to identify the target SGSN, Broadcast RAI is used by target SGSN to find the source SGSN.
(2) New PTMSI = F2(target NRI, source NRI, move information) with current RAI, target NRI is used to identify the target SGSN, source NRI is used by target SGSN to find the source SGSN, move information is used by target SGSN to identify that current procedure is a move.

In Fig. 4, C1, C2 and C3 mean the CAMEL procedure calls shall be performed. The details can be found in 3GPP 23.060, which is incorporated by reference in its entirety.

In the above example, the basic idea is to move MS with PDP/payload to another SGSN in the pool without detach them and all PDP contexts will be kept at target SGSN so as to minimize packet loss.

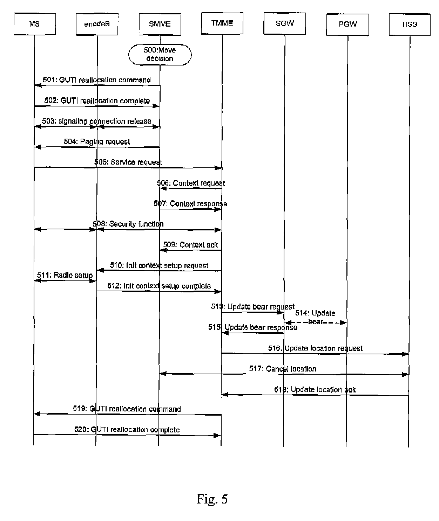

Below follows a description of the individual components and their respective conditions in another WCDMA example. Furthermore, the actual move procedure is described with reference to Fig. 5.
Step 500: Move decision is made by source MME for the MS.
Step 501: Source MME initiates GUTI reallocation procedure for the MS Information for target MME to identify source MME and move procedure should be included in GUTI. Note that if MS is not in ECM-connect, MME will page the MS before this step.
Step 502: The MS responds with a GUTI Reallocation Complete message towards the SMME.
Step 503: Source MME releases the signaling connection.
Step 504: Source MME pages the MS by sending a Paging request to MS.
Step 505: MS accepts the paging request, and initiates service request procedure. Because of target MME ID in GUTI, the message is routed to target MME by enodeB.
Step 506: While receiving the service request, target MME identify move procedure and source MME ID from the GUTI and send context request to source MME to fetch the context of the MS.
Step 507: As a reply, SMME return a Context response.
Step 508: Then, target MME initiates security function. Namely, target MME interacts with MS via enodeB to perform a security process.
Step 509: Then, target MME sends a ContextAck to source MME.
Step 510: Target MME initiates context setup procedure to establish the bear.
Step 511; Then, between MS and enodeB, Radio setup is carried out.
Step 512: Upon the Radio setup is finished, enodeB sends a message Init context setup complete to TMME.
Step 513: Target MME initiates update bear procedure to SGW,
Step 514: Then, update bear is carried out by SGW and PGW.
Step 515: SGW sends an Update bear response to TMME.
Step 516: Target MME initiates update location procedure to HSS.
Step 517: As a response, HSS initiates cancel location to source MME.
Step 518: Upon completing cancel location, HSS sends an Update location Ack to TMME.
Step 519: A real GUTI of target MME is allocated to the MS.
Step 520: As a response, MS returns GUTI reallocation complete to TMME.

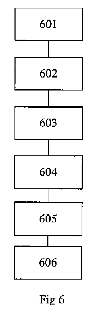

Fig. 6 illustrates another specific example of the method according to the present invention in a more detailed form:
601. A decision is taken to move the MS's contexts from one MME to another MME. This decision may be taken in a source MME or elsewhere in the infrastructure network depending on reason for decision or where statistical analysis is provided if the decision is based on statistics.
602. The source mobility management device transmits user equipment communication data, e.g. MM and PDP context data, including security context data to a target mobility management device and receives from the target MME temporary UE identity data.
603. The source mobility management device transmits data relating to the target mobility management device to the user equipment.
604. Connection between the source MME and the UE is released, release information is sent to the target MME and a new connection between the target MME and the UE is established wherein the target MME takes over control of the control plane.
605. Updating of location information in subscription node, e.g. HLR or HSS. 406. Re-establishing 3GDT connections.

In another WCDMA exemplary case, move of an active subscriber from a source MME, i.e. SGSN, to a target MME, i.e. SGSN, involves several parts:
1. Transfer of the MM and PDP Contexts, including security context, from source to target SGSN. In this step as the procedure is initiated by the source SGSN, therefore the Forward Relocation procedure is used.
2. Switching of GGSN DL and UL path from source to target SGSN or in the case of 3GDT from RNC to target SGSN
3. Re-allocation of PTMSI using a new PTMSI assigned by target SGSN
4. Target SGSN taking over the control plane signaling by switching the lu-connection from the RNC, from source to target SGSN
5. Updating location in the HLR
6. Re-establishing the RABs
7. In the case of 3GDT switching GGSN DL and UL path from target SGSN to RNC

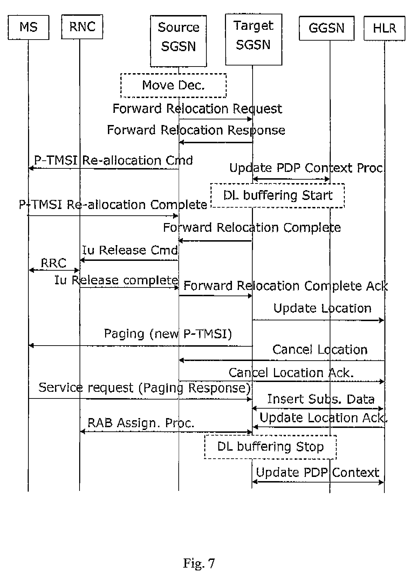

Below follows a description of the individual components and their respective conditions in the WCDMA example. Further, the actual move procedure is described in Fig. 7.

### Transfer of the MM and PDP Contexts from source to target SGSN including security context

MM and PDP contexts may be moved between two SGSNs either by use of the SGSN Context procedure (used at ISRAU) or by use of the Forward Relocation procedure (used at PS Handover and SRSN relocation).

As the SGSN Context procedure is started by the target (new) SGSN, it requires that the target SGSN is aware of the need to move the MS's context. This is also the case when an MS is moved by use of pRAU but for an MS running payload there will be no pRAU and that excludes this procedure.

Preferably, the Forward Relocation procedure is therefore used and is initiated by the source SGSN.

### Switching of GGSN DL and UL path from source to target SGSN or in the case of 3GDT from RNC to target SGSN

By using the Update PDP Context procedure it is possible to give GGSN the target SGSN's IP address and TEID for each PDP Context, thereby switching the SGSN-GGSN payload tunnel from source to target SGSN.

### Reallocation of P-TMSI using a new P-TMSI assigned by target SGSN

Reallocation of P-TMSI is necessary when entering a new SGSN, and is normally done through either Attach or RAU Accept with the subsequent Attach or RAU Complete message. In the case of moving an active subscriber neither of these procedures is at hand. Instead there is a stand-alone P-TMSI re-allocation procedure standardized in 3GPP.

### Target SGSN taking over the control plane signaling by switching the lu-connection from the RNC, from source to target SGSN

As the lu-connection between the RNC and the SGSN is closely related to an RRC connection between the RNC an the MS, it is not possible to just switch the Lu-connection between source and target SGSN without affecting the RRC connection, at least not without co-operation from the RNC. The procedure will therefore in the first step involve the task of releasing the lu-connection in the source SGSN thereby also releasing the RRC connection. The target SGSN must therefore in the second step page the MS (using the new P-TMSI) in order to set up a lu-connection from target SGSN and establishing a new RRC connection. In case the MS spontaneously issues a Service Request (data), the paging will not be necessary. Following this, by use of the Security Mode procedure, a security context is re-established in the RNC.

### Updating of location information in subscription node, e.g. HLR or HSS.

This is the same as a normal update of location used e.g. at Inter SGSN RAU i.e. handled by the Update Location procedure.

### Re-establishing the RABs and in the case of 3GDT switching GGSN DL and UL path from target SGSN to source RNC

This is handled as normal through the RAB Assignment procedure. In the case of 3GDT the RNC will be given IP address and TEID for the GGSN and after the RAB Assignment procedure is concluded the GGSN will be updated with the IP address and TEID for the RNC regarding user plane.

### The move of active subscriber procedure

In view of the above described individual components the following procedure is proposed as seen in Fig. 7. It should be noted that not all steps are shown in Fig. 7 in order to ease to overview of the invention and that included message parameter fields are shown as examples only.
1. The source SGSN decides to move an MS and sends a Forward Relocation Request (IMSI, TEID control plane, RANAP Cause, MM Context, PDP Context, SGSN control plane address, Target Identification=empty, UTRAN transparent container = empty, Private Extension including Move indicator) message towards the selected target SGSN. By this step the MM and PDP Contexts are transferred from source to target SGSN.
2. The target SGSN validates the request with respect to IMSI analysis, roaming
   restrictions, used ciphering algorithm etc. If the new MS can't be accepted the request is rejected otherwise it is assigned a new P-TMSI and a Forward Relocation Response (e.g. with control parameters Cause, TEID control plane, SGSN control plane address, Private Extension including new P-TMSI) message is sent to source SGSN.
3. In order to switch the GGSN DL and UL path from source to target SGSN the target SGSN sends, per POP context, an Update PDP Context Request message to the GGSN.
4. The GGSN updates the POP context fields and returns an Update PDP Context Response message to the target SGSN. From this point DL packets from GGSN will be directed towards the target SGSN, UL packets are still sent from source SGSN towards GGSN. The DL packets may be discarded or buffered until a new lu-connection and RABs are established between the MS and the target SGSN.
5. The target SGSN informs the source SGSN that the switching of the SGSN-GGSN payload is completed by sending a Forward Relocation Complete message.
6. The source SGSN starts re-allocation of P-TMSI using the new P-TMSI assigned in target SGSN and received in step 2. Source SGSN sends a TMSI Reallocation Command (new P-TMSI) message to the MS.
7. The MS responds with a P-TMSI Reallocation Complete message towards the source SGSN. Now the MS has a P-TMSI including an NRI pointing to the target SGSN, but signaling will still be directed towards the source SGSN as long as the current lu-connection remains.
8. To release the lu-connection between the RNC and the source SGSN the source SGSN will perform the lu Release procedure (lu Release Command followed and the response lu Release Complete). This procedure implies also the release of the RRC-connection. As a consequence of lu-release all possible RABs will also be released.
9. As a confirmation of the completed P-TMSI Reallocation procedure and the release of the lu-connection the source SGSN sends a Forward Relocation Complete Ack message to the target SGSN.
10. The target SGSN informs the HLR of the change of SGSN by sending an Update Location message to the HLR.
11. If the MS wants to send uplink data it will issue a Service Request (data) in order to re-establish the lu-connection and the RABs.
12. The Cancel Location procedure is performed between the HLR and the source
   SGSN.
13. The Insert Subscriber Data procedure is performed between the HLR and the
   target SGSN.
14. If the MS, in step 11 didn't issue a Service Request (data) then the target SGSN will page the MS using a Paging Request message including the new P-TMSI.
15. The MS responds with a Service Request (paging response) which due to the new F-TMSI will be directed towards the target SGSN.
16. In order to re-establish the security context in the RNC, the target SGSN starts the Security Mode procedure.
17. The HLR acknowledges the Update Location by sending an Update Location Acknowledge message to the target SGSN.
18. The target SGSN will, by using the RAB Assignment procedure: set up the RABs towards the RNC, to be able to send and receive payload to and from the MS. In case of 3GDT the RNC will be given IP addresses and TEIDs of the GGSN.
19. In case of 3GDT the GGSN needs to be updated with IP addresses and TEIDs
   of the RNC regarding the user plane. This is done by use of the Update POP Context procedure.

If the MS to be moved is not in CONNECTED state then some procedures will be omitted. Furthermore, the MS needs to be paged and the lu-connection must be established before performing the P-TM SI reallocation procedure. After the P-TMSI reallocation procedure the lu-connection will be released.

In summary, move in an SGSN pool for WCDMA may be described as follows:

The first step involves parts of the Inter-SGSN inter SRNS procedure i.e. the Forward Relocation Request and Response messages. These are used to exchange MS context data and new F-TMSI (allocated in new SGSN) between the old and new SGSN.

As the next step the old SGSN reallocates the P-TMSI using the new P-TMSI pointing to the new SGSN, At the same time in the new SGSN, the payload paths to and from GGSN are switched from old to new SGSN (or in the case of 3GDT, from RNC to new SGSN). Downlink payload packets are then buffered or discarded in the new SGSN.

After having received the Forward Relocation Complete message (saying that the payload path switch towards GGSN is completed) and concluded the P-TMSI reallocation, the old SGSN releases the lu and informs the new SGSN. The new SGSN immediately pages the MS (unless the MS initiates a Service Request) and re-establishes the lu and the RABs. Payload may then resume between GGSN and the MS via the new SGSN (in case of 3GDT, updates towards GGSN re-establishes the 3GDT paths between the RNC and the GGSN). Update Location towards the HLR is performed as soon as the new SGSN is informed via the Forward Relocation Complete Ack message that the lu connection is released in the old SGSN. This is discussed in relation to Fig, 7.

Move in an LTE case in an MME pool follows a similar procedure:

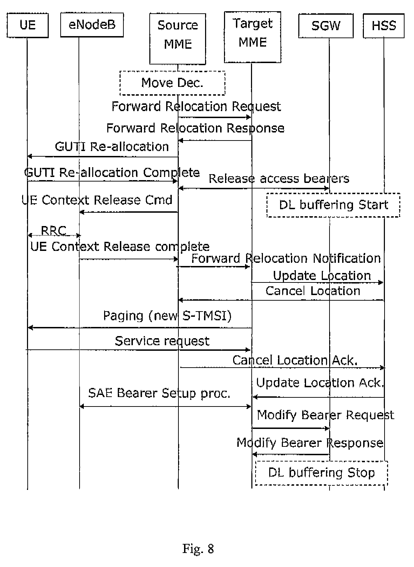

In Fig. 7, the move procedure in the WCDMA case was discussed, but in the MME case the process is slightly different and is discussed below in relation to Fig. 8. The first step after a move decision involves parts of the Inter-MME Si-based Handover procedure i.e. the Forward Relocation Request and Response messages. These are used to exchange UE context data and new GUTI (allocated in new MME) between the old and new MME. As the next step the old MME uses a GUTI Reallocation procedure with the new GUTI pointing to the new MME. To temporarily stop the downlink payload packets from the Serving Gateway (SGW. a release access bearer procedure is executed from the old MME towards the SGW This releases all bearers and the Si connection (UE context Release Command) between the old MME and the eNodeB is released by the S1 Release procedure (UE context Release Complete), with an RRC connection release between the eNodeB and the UE. Payload packets may he buffered in the SGW or discarded.

As a final step the new MME is informed when the S1 Connection is released by sending the Forward Relocation Complete Notification from the old MME. This messages includes the NAS Uplink and Downlink count in order to be able to seamlessly continue with the NAS ciphering. The new MME then immediately pages the UE (unless the UE initiates a Service Request) and re-establishes the S1 Connection and the SAE Bearers ("E-RAB'). MME re-establishes the bearers at the SGW by executing the Modify Bearer Request. Payload may then resume between SGW and the MS via the eNodeB. Update Location towards the HSS is performed as soon as the new MME is informed via the Forward Relocation Complete Notification that the S1 connection is released in the old MME. It should be noted that the Modify Bearer Request/Response are performed per PDN connection and that each PDN connection buffering/discard is released at this time.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

### Abbreviations

- 3GDT: 3G Direct Tunnel
- CN: Core Network
- CS: Circuit Switched
- DNS: Directory Name Server
- GGSN: Gateway GPRS Support Node
- GUTI: Globally Unique Temporary UE Identity
- HLR: Home Location Register
- HSS: Home Subscriber Server
- LTE: Long Term Evolution
- MME: Mobility Management Entity
- MS: Mobile Station
- NAS: Non Access Stratum
- NRI: Network Resource Identifier
- O&M: Operation and Maintenance
- PS: Packet Switched
- RA: Routing Area
- RNC: Radio Network Controller
- SRNS: Serving Radio Network Subsystem
- SGSN: Serving GPRS Support Node
- P-TMSI: Packet-Temporary Mobile Station Identity
- UE: User Equipment
- WCDMA: Wideband Code Division Multiple Access

## Claims

1. A source attachment node (4) in a wireless communication network (6), comprising:
- a processing unit (201);
- a memory (202);
- a communication interface (204);
wherein the processing unit is arranged to execute instruction sets stored in the memory, for receiving a MS (1) related information, handing attachment status of the MS, and further arranged to move attachment of the active MS from the source attachment node (4) to a target attachment node (5) using the steps of:
- obtaining a decision to move the MS to the target attachment node;
- transmitting reallocation messages to the MS;
- paging the MS;

2. The node according to claim 1, wherein the node is one of a Serving GPRS Support Node and a Mobility Management Entity.

3. The node according to claim 1, further arranged to receiving a cancel location message from a subscription server.

4. The node according to claim 1, further arranged to exchanging bearer modification messages with a gateway (7).

5. A source attachment node (4) in a wireless communication network (6), comprising:
- a processing unit (201);
- a memory (202);
- a communication interface (204);
wherein the processing unit is arranged to execute instruction sets stored in the memory, for receiving a MS (1) related information, handing attachment status of the MS, and further arranged to move attachment of the active MS from the source attachment node (4) to a target attachment node (5) using the steps of:
- obtaining a decision to move the MS to the target attachment node;
- exchanging MS communication data with the target attachment node;
- exchanging re-allocation message with the MS; and
- sending a relocation message to the target attachment node.

6. The node according to claim 5, wherein the node is one of a Serving GPRS Support Node and a Mobility Management Entity.

7. The node according to claim 5, further arranged to receiving a cancel location message from a subscription server.

8. The node according to claim 5, further arranged to exchanging bearer modification messages with a gateway (7).

9. The node according to claim 5, further arranged to use a step of transferring security context data to the target attachment node.

10. A target attachment node (5) in a wireless communication network (6), comprising:
- a processing unit (201);
- a memory (202);
- a communication interface (204);
wherein the processing unit is arranged to execute instruction sets stored in the memory, for receiving a MS (1) related information, handing attachment status of the MS, and further arranged receive attachment of the MS from a source attachment node (4) using the steps of:
- receiving service request from the MS;
- requesting MS communication data from the source attachment node;
- re-establishing bearer connection for the MS.

11. The node according to claim 10, further arranged to receive and buffer downlink payload data destined for the MS until re-establishment of bearer connection is executed.

12. The node according to claim 10, further arranged to discard payload data destined for the MS until re-establishment of bearer connection is executed.

13. The node according to claim 10, wherein the node is one of a Serving GPRS Support Node and a Mobility Management Entity.

14. The node according to claim 10, further arranged to send an update location message to a user subscription service (8).

15. The node according to claim 10, further arranged to exchanging bearer modification messages with a gateway (7).

16. A target attachment node (5) in a wireless communication network (6), comprising:
- a processing unit (201);
- a memory (202);
- a communication interface (204);
wherein the processing unit is arranged to execute instruction sets stored in the memory, for receiving a MS (1) related information, handing attachment status of the MS, and further arranged receive attachment of the MS from a source attachment node (4) using the steps of:
- exchanging user equipment communication data with the source attachment node;
- paging the user equipment;
- re-establishing bearer connection for the user equipment.

17. The node according to claim 16, further arranged to receive and buffer downlink payload data destined for the MS until re-establishment of bearer connection is executed.

18. The node according to claim 16, further arranged to discard payload data destined for the MS until re-establishment of bearer connection is executed.

19. The node according to claim 16, wherein the node is one of a Serving GPRS Support Node and a Mobility Management Entity.

20. The node according to claim 16, further arranged to send an update location message to a user subscription service(8).

21. The node according to claim 16, further arranged to exchanging bearer modification messages with a gateway(7).

22. A method handing attachment status for a MS (1) in a wireless communication network (6), comprising steps of:
- transmitting reallocation messages to the MS by a source node;
- receiving in the MS new identification data from the source node;
- sending service request to a target node by the MS;
- requesting MS communication data from the source node by the target node;
- re-establishing bearer connection.

23. The method according to claim 22, further comprising a step of buffering downlink payload communication data.

24. The method according to claim 22, further comprising a step of communicating subscription data with a subscription server.

25. The method according to claim 22, further comprising a step of discarding payload data destined to the UE until re-establishment of bearer connection is executed.

26. A method handing attachment status for a MS (1) in a wireless communication network (6), comprising steps of:
- exchanging UE information between a source (4) and target (5) core network node;
- receiving in the source node new identification data for the MS from the target node;
- exchanging re-allocation messages between the source node and the MS;
- transferring from the source node new identification data to the MS; and
- re-establishing bearer connection.

27. The method according to claim 26, further comprising a step of buffering downlink payload communication data.

28. The method according to claim 26, further comprising a step of communicating subscription data with a subscription server.

29. The method according to claim 26, further comprising a step of discarding payload data destined to the UE until re-establishment of bearer connection is executed.
